# EUROPÄISCHE PATENTSCHRIFT

(11) **EP 3 648 309 B1**
(45) Veröffentlichungstag und Bekanntmachung des Hinweises auf die Patenterteilung: **05.01.2022**
(21) Anmeldenummer: 19202124.4
(22) Anmeldetag: 09.10.2019
(51) Int. Cl.: H02K 1/27, H02K 1/28, H02K 15/12, H02K 15/03, H02K 7/04

(54) **EC-MOTOR FÜR EIN ELEKTRISCHES HANDWERKZEUG SOWIE VERFAHREN ZUR HERSTELLUNG EINES ROTORS FÜR EINEN EC-MOTOR**
EC MOTOR FOR AN ELECTRIC HANDHELD TOOL AND METHOD FOR PRODUCING A ROTOR FOR AN EC MOTOR
MOTEUR À COMMUTATION ÉLECTRONIQUE POUR UN OUTIL PORTATIF ÉLECTRIQUE AINSI QUE PROCÉDÉ DE FABRICATION D'UN ROTOR POUR UN MOTEUR À COMMUTATION ÉLECTRONIQUE

(30) Priorität: 05.11.2018 DE 102018127501
(43) Veröffentlichungstag der Anmeldung: 06.05.2020
(73) Patentinhaber: C. & E. Fein GmbH, 73529 Schwäbisch Gmünd-Bargau (DE)
(72) Erfinder: Maier, Christoph, 73529 Schwäbisch Gmünd-Bargau (DE); Burkhardt, Thomas, 73529 Schwäbisch Gmünd-Bargau (DE); Adamczyk, Martin, 73529 Schwäbisch Gmünd-Bargau (DE)
(74) Vertreter: Wallinger, Michael

(56) Entgegenhaltungen:
- EP-A1- 2 416 013
- DE-A1-102010 061 778
- DE-A1-102011 089 488
- DE-A1-102016 216 128
- JP-A- 2002 034 187
- US-A- 5 886 441

## Beschreibung

Die Erfindung betrifft einen EC-Motor für ein elektrisches Handwerkzeug gemäß dem Oberbegriff des Anspruchs 1. Außerdem betrifft die Erfindung ein Verfahren zur Herstellung eines Rotors für einen EC-Motor.

Ein derartiger Motor ist beispielsweise aus der DE 10 2010 061 778 A1 bekannt. Bei diesem Motor sind die Taschen, in denen die Permanentmagnete aufgenommen sind, sternförmig zueinander angeordnet und es werden Blechlamellen verwendet, die allesamt über einen Radialkanal mit der Durchtrittsöffnung verbunden sind, aber unterschiedlich gebildet sind.

Aus der EP 1 981 149 A2 ist ein EC-Motor bekannt, bei der die Blechlamellen unterschiedliche Ausnehmungen aufweisen, die zu dem Innenloch, in dem die Rotorwelle aufgenommen ist, entweder geschlossen oder geöffnet sind. Diese Blechlamellen werden dabei alternierend angeordnet, um ein Vergießen der in den Aufnahmen aufgenommenen Permanentmagnete zu erleichtern.

Die JP 2002 034187 A zeigt einen EC-Motor, bei dem die Permanentmagnete ebenfalls in Taschen aufgenommen sind, die jedoch nicht über Radialkanäle mit der zentralen Durchtrittsöffnung verbunden sind. Einen vergleichbaren Aufbau zeigt auch die DE 10 2016 216 128 A1, bei dem benachbarte Taschen über bogenförmige Kanäle miteinander verbunden sind. Dies gilt auch für die DE 10 2011 089 488 A1 und die EP 2 416 013 A1, bei denen ebenfalls keine Radialkanäle vorgesehen sind, um die Vergussmasse in die Taschen zu leiten, in denen die Magnete aufgenommen sind.

Bei dem aus der US 5 886 441 A bekannten Motor sind in den Blechlamellen keine Taschen ausgebildet. Vielmehr werden die Permanentmagnete zwischen kreisringausschnittsförmigen Sektoren aufgenommen.

Bei den aus dem Stand der Technik bekannten EC-Motoren hat es sich jedoch als nachteilig gezeigt, dass durch die alternierende Anordnung der Blechlamellen die Montage des EC-Motors erschwert wird, da diese zunächst entsprechend ausgerichtet werden müssen. Zudem wird durch den begrenzten Querschnitt der einzelnen Zuführungen letztlich auch der Zufluss der Vergussmasse zu den Permanentmagneten erschwert.

Der vorliegenden Erfindung liegt daher die Aufgabe zugrunde, die vorgenannten Nachteile zu reduzieren und einen verbesserten EC-Motor und außerdem ein verbessertes Herstellungsverfahren bereitzustellen.

Die den EC-Motor betreffende Aufgabe wird gemäß der Erfindung bei einem EC-Motor der eingangs genannten Art durch die Merkmale des kennzeichnenden Teils des Anspruchs 1 gelöst. Hierdurch wird zum einen erreicht, dass die Breite der Radialkanäle - also deren Erstreckung in axialer Richtung bezogen auf die Längsachse der Rotorwelle - erhöht werden kann, wodurch der Zufluss des Vergussmittels zu den in den Taschen aufgenommenen Permanentmagneten verbessert wird. Zudem wird durch die breiteren Radialkanäle auch erreicht, dass das Vergussmaterial vereinfacht die in den Taschen befindlichen Permanentmagnete radial beaufschlagen kann, wodurch es möglich ist, auf eine genaue Positionierung der Permanentmagnete bei der Montage, insbesondere beim Zuführen der Vergussmasse zu den Permanentmagneten, zu verzichten, da diese durch die Vergussmasse radial nach außen verstellt werden. Die Vergussmasse kann also in den Ringkanal eingeleitet werden, von dem sich diese dann über die Radialkanäle zu den Taschen ergießen kann und dort die Permanentmagnete zumindest teilweise umschließt und damit fest in den Taschen sichert. Durch die Vergussmasse wird zudem eine elektrische Isolierung bereitgestellt.

Erfindungsgemäß hat es sich zudem auch als vorteilhaft erwiesen, dass das Rotorblechpaket aufgebaut ist aus Blechlamellen, deren sämtliche Taschenabschnitte jeweils entweder mit der Durchtrittsöffnung über die Kanalabschnitte fluidleitend verbunden oder von der Durchtrittsöffnung getrennt sind. Auch hierdurch wird der Fertigungsaufwand reduziert, da dann auf eine Ausrichtung der Blechlamellen im Wesentlichen verzichtet werden kann. Es muss allenfalls gewährleistet werden, dass die Taschenabschnitte zueinander orientiert werden. Es werden also letztlich zumindest zwei unterschiedliche Arten von Blechlamellen gebildet. Bei der ersten Art sind die Taschenabschnitte mit der Durchtrittsöffnung über die radialen Kanalabschnitte fluidleitend verbunden. Bei der zweiten Art sind die Taschenabschnitte hingegen von der Durchtrittsöffnung räumlich getrennt. Im Rahmen der Erfindung ist es in diesem Zusammenhang insbesondere vorgesehen, dass das Rotorblechpaket zumindest an einer der Stirnseiten, bevorzugt an beiden Stirnseiten, Blechlamellen aufweist, deren Taschenabschnitte von der Durchtrittsöffnung getrennt sind, wodurch die Stabilität des Motors verbessert wird. Zudem wird hierdurch auch erreicht, dass die Gefahr eines Austretens der Vergussmasse in axialer Richtung aus dem Rotorblechpaket reduziert wird.

Erfindungsgemäß hat es sich auch als günstig gezeigt, dass der Anteil der die Kanalabschnitte aufweisenden Blechlamellen an der Gesamtzahl der Blechlamellen des Rotorblechpakets zwischen 98 % und 70%, besonders bevorzugt zwischen 95 % und 80 % liegt. Hierdurch wird eine ausreichende Umströmung der in den Taschen enthaltenen Permanentmagnete erreicht und gleichzeitig die Stabilität des Rotorblechpakets sichergestellt.

Bewährt hat es sich zudem, wenn der Radialkanal fluidleitend mit mindestens einem in den Taschen ausgebildeten Axialkanal verbunden ist. Hierdurch wird das Vergießen der in den Taschen aufgenommenen Permanentmagnete erleichtert, da die Vergussmasse dadurch auch innerhalb der Tasche in axialer Richtung - also parallel zu der Längsachse der Rotorwelle - vereinfacht strömen kann.

Als vorteilhaft hat es sich auch erwiesen, wenn der Axialkanal und/oder der Radialkanal pro Tasche jeweils mehrfach, insbesondere zweifach, vorgesehen ist. Insbesondere wenn der Radialkanal pro Tasche zweifach vorgesehen ist, können diese Radialkanäle durch Blechlamellen voneinander getrennt werden, deren Taschenabschnitte von der Durchgangsöffnung getrennt sind.

Insbesondere wenn mehrere Radialkanäle pro Tasche vorgesehen sind, hat es sich dabei als besonders günstig gezeigt, wenn das Verhältnis zwischen der Breite des Radialkanals und der axialen Erstreckung (L) des Ringkanals in Abhängigkeit von der Anzahl (n) der Radialkanäle pro Tasche zwischen 70 % x L/n und 98 % x L/n und besonders bevorzugt zwischen 80 % x L/n und 95 % x L/n liegt. Hierdurch wird erreicht, dass die Durchströmung maximiert werden kann und gleichzeitig die Stabilität des Rotorblechpakets sichergestellt bleibt. Auch ist unter der Breite des Radialkanals wieder dessen Erstreckung parallel zu der Längsachse der Durchtrittsöffnung zu verstehen.

Um die Positionierung des Permanentmagneten in der Tasche weiter zu begünstigen, hat es sich auch als vorteilhaft erwiesen, wenn die Einmündung des Radialkanals in die Tasche taschenmittig angeordnet ist.

Als besonders vorteilhaft hat es sich auch gezeigt, wenn die Taschen durch eine Trennstruktur jeweils unterteilt sind in mindestens ein erstes Kompartiment und ein zweites Kompartiment. Dies begünstigt die Montage der Permanentmagneten in dem Rotorblechpaket. Als Trennstrukturen können insbesondere Blechlamellen verwendet werden, die keine Taschenabschnitte aufweisen. Diese können auch als stirnseitiger Abschluss verwendet werden. In diesem Zusammenhang hat es sich zudem weiter bewährt, wenn die Trennstruktur derartig ausgebildet ist, dass die Kompartimente fluidleitend miteinander verbunden sind. Dies kann beispielsweise dadurch erfolgen, dass in den als Trennstrukturen verwendeten Blechlamellen Durchlässe ausgebildet sind, durch die die Vergussmasse zwischen in axialer Richtung benachbarten Kompartimenten durchtreten kann.

Weiterhin als vorteilhaft hat es sich auch gezeigt, wenn die Breite des Taschenquerschnitts zwischen 2 % und 15 % und bevorzugt zwischen 5 % und 10 % größer ist als die Dicke des in der Tasche aufgenommenen Permanentmagneten. Hierdurch wird ein Umströmen der in den Taschen aufgenommenen Permanentmagnete begünstigt.

Die Montage wird dadurch begünstigt, dass der mindestens eine Axialkanal an den parallel zu den Radialkanälen ausgerichteten Seiten der Tasche ausgebildet ist. Hierdurch ist es möglich, dass die Vergussmasse seitlich um die Permanentmagnete herumströmen kann, wodurch die Permanentmagnete noch besser in den Taschen gesichert werden können.

Der Herstellungsaufwand lässt sich auch dadurch weiter reduzieren, dass die Vergussmasse aus einem duroplastischen Kunststoff gebildet ist. Insbesondere zeichnet sich der duroplastische Kunststoff durch eine einfache Verarbeitbarkeit und insbesondere dadurch aus, dass dieser beim Aushärten - anders als beispielsweise ein thermoplastischer Kunststoff - nur in einem sehr geringen Umfang eine Volumenänderung erfährt.

Der Wuchtgüte des Rotors lässt sich dadurch verbessern, dass an mindestens einer der Stirnseiten des Rotorblechpakets ein Wuchtring angeordnet ist. Hierdurch ist es möglich, durch eine Bearbeitung des Wuchtringes eventuell vorhandene Unwuchten des Rotors auszugleichen. Zudem kann durch die Wuchtringe auch eine Abdichtung der Taschen erreicht werden. Wenn die Anforderungen an die Wuchtgüte vergleichsweise gering sind, kann alternativ auch eine Dichtscheibe verwendet werden, die nur eine vergleichsweise geringe axiale Erstreckung aufweist. Hierbei kann es sich insbesondere auch um eine magnetisierbare Scheibe handeln, die zusätzlich als Sensor verwendet werden kann.

Die das Verfahren zur Herstellung eines Rotors für einen EC-Motor betreffende Aufgabe wird gemäß der Erfindung durch ein Verfahren nach Anspruch 12 gelöst, das die folgenden Schritte umfasst:
- Bereitstellen einer Rotorwelle;
- Bereitstellen eines eine Durchtrittsöffnung aufweisenden Rotorblechpaketes mit Taschen zur Aufnahme von Permanentmagneten wobei das Rotorblechpaket (5) aufgebaut ist aus Blechlamellen (6), deren sämtliche Taschenabschnitte (17) jeweils entweder mit der Durchtrittsöffnung (4) über die Kanalabschnitte (14) fluidleitend verbunden oder von der Durchtrittsöffnung (4) räumlich getrennt sind, und wobei dass der Anteil der die Kanalabschnitte (14) aufweisenden Blechlamellen (6) an der Gesamtzahl der Blechlamellen (6) des Rotorblechpakets (5) zwischen 70% und 98% und besonders bevorzugt zwischen 80% und 95% liegt;
- Einlegen der Permanentmagnete in die Taschen des Rotorblechpakets;
- Einsetzen der Rotorwelle und des Rotorblechpaketes in eine Gießform relativ zueinander zentriert, derart, dass zwischen der in der Durchtrittsöffnung aufgenommenen Rotorwelle und dem Rotorblechpaket ein Ringkanal ausgebildet ist
- Schließen der Gießform;
- Zuführen von Vergussmasse unter Druck über einen Angusskanal im Wesentlichen ausschließlich in die stirnseitige Mündung des Ringkanals zwischen der Rotorwelle und dem Rotorblechpaket durch in dem Rotorblechpaket ausgebildeten Radialkanäle in die Taschen mit den darin aufgenommenen Permanentmagneten;
- Aushärten der Vergussmasse;
- Entnehmen des Rotors aus der Gießform.

Durch ein derartiges Herstellungsverfahren bei dem die Vergussmasse die in den Taschen befindlichen Permanentmagnete radial beaufschlagt, kann insbesondere auf eine aufwändige Sicherung der Permanentmagnete verzichtet werden, wodurch sich der Montageaufwand gegenüber herkömmlichen Verfahren, bei denen die Vergussmasse den Magneten in axialer Richtung parallel zur Längsachse zugeführt wird, deutlich reduziert. Insbesondere kann dann auf Angusskanäle in den in vorteilhafter Weise an den Stirnseiten des Rotorblechpakets angeordneten Wuchtringe verzichtet werden. Bei der Verwendung derartiger Wuchtringe müssten diese nämlich anderenfalls zunächst genau ausgerichtet werden. Zudem ist es bei diesem Verfahren möglich, das Rotorblechpaket mit den darin befindlichen Permanentmagneten und zumindest einem der Wuchtringe als vormontierte Einheit in die Gießform einzusetzen, wodurch sich die Herstellung des Rotors weiter vereinfachen lässt.

Im Folgenden wird die Erfindung an einem in den Zeichnungen dargestellten Ausführungsbeispiel näher erläutert; es zeigen:
- Fig. 1: einen Längsschnitt durch einen EC-Motor,

- Fig. 2: eine perspektivische Ansicht auf ein Rotorblechpaket,
- Fig. 3: eine Draufsicht auf eine erste Art einer Blechlamelle, und
- Fig. 4: eine Draufsicht auf eine zweite Art einer Blechlamelle.

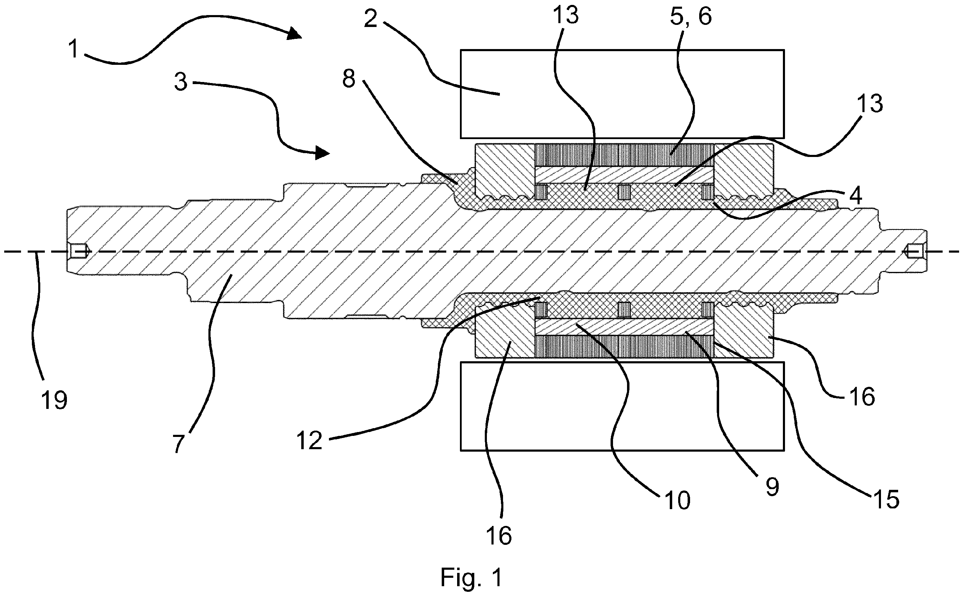

Figur 1 zeigt einen EC-Motor 1 für ein elektrisches Handwerkzeug, der einen Stator 2 und einen darin drehbar gelagerten Rotor 3 umfasst. Der Rotor 3 umfasst dabei ein eine Durchtrittsöffnung 4 aufweisendes Rotorblechpaket 5, das aus einzelnen Blechlamellen 6 gebildet ist. In der Durchtrittsöffnung 4 ist eine Rotorwelle 7 aufgenommen, die durch eine Vergussmasse 8 mit dem Rotorblechpaket 5 drehfest verbunden ist. In dem gezeigten Ausführungsbeispiel ist die Vergussmasse 8 aus einem duroplastischen Kunststoff gebildet. Zudem sind in dem Rotorblechpaket 5 Taschen 9 ausgebildet, in denen jeweils Permanentmagnete 10 aufgenommen sind, um in Zusammenwirkung mit dem Stator 2 durch eine elektrische Kommutierung Drehmoment zu erzeugen. Zwischen der Rotorwelle 7 und der Wandung 11 der Durchtrittsöffnung 4 ist hierbei ein Ringkanal 12 gebildet, durch den die Vergussmasse 8 in den Rotor 3 eingeleitet wird. In der Wandung 11 der Durchtrittsöffnung 4 wiederum sind Radialkanäle 13 ausgebildet, durch die die Vergussmasse 8 von dem Ringkanal 12 radial zu den in den Taschen 9 befindlichen Permanentmagneten 10 geleitet wird. Die Radialkanäle 13 sind dabei aus mehreren in benachbarten Blechlamellen 6 des Rotorblechpakets 5 ausgebildeten Kanalabschnitten 14 gebildet. An den Stirnseiten 15 des Rotorblechpakets 5 des EC-Motors 1 ist in dem gezeigten Ausführungsbeispiel jeweils ein Wuchtring 16 angeordnet.

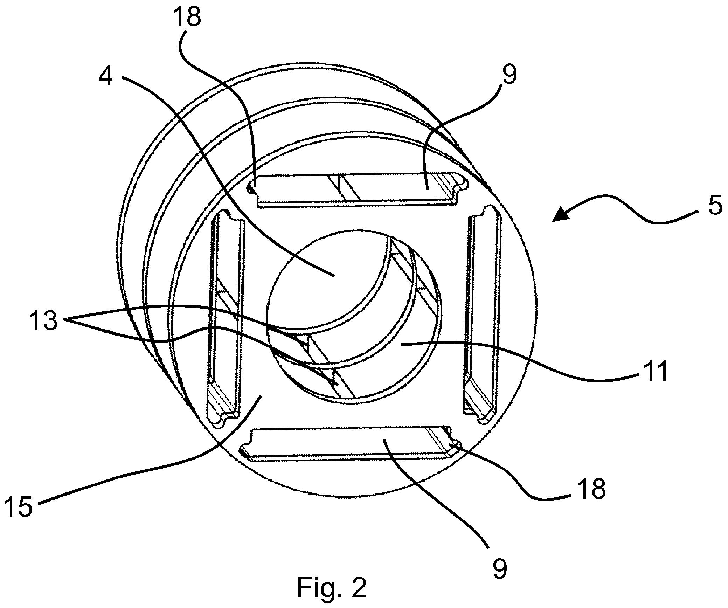

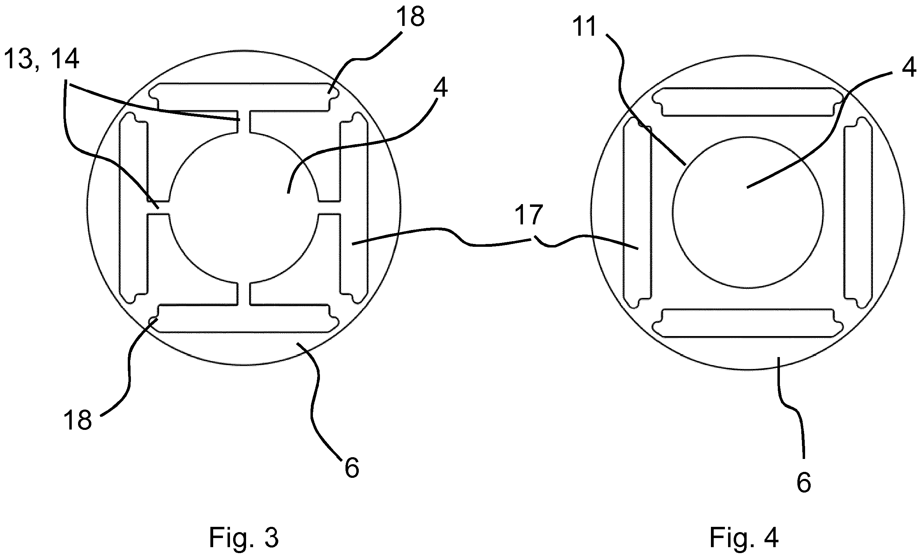

Wie der Figur 2, aber insbesondere auch der Figur 3 und der Figur 4 entnommen werden kann, ist das Rotorblechpaket 5 aus unterschiedlichen Blechlamellen 6 aufgebaut, die sich bezüglich ihres Aufbaus unterscheiden. So sind bei der in der Figur 3 dargestellten ersten Ausführungsform der Blechlamelle 6 Taschenabschnitte 17 über Kanalabschnitte 14 mit der Durchtrittsöffnung 4 fluidleitend verbunden. Bei der in der Figur 4 dargestellten Ausführungsform der Blechlamelle 6 sind hingegen die Taschenabschnitte 17 so gestaltet, dass diese keine Verbindung zu der Durchtrittsöffnung 4 aufweisen. Die unterschiedlichen Blechlamellen 6 werden dabei axial so gestaffelt, dass jeweils die Stirnseiten 15 des Rotorblechpakets 5 aus den Blechlamellen 6 gemäß der Figur 4 gebildet sind. Zwischen den Stirnseiten 15 sind dann Blechlamellen 6 gemäß der Figur 3 angeordnet, bei denen die Taschen 9 über die Kanalabschnitte 14 mit der Durchtrittsöffnung 4 verbunden sind. Bei dem in der Figur 2 dargestellten Rotorblechpaket 5 ist der Radialkanal 13 durch mehrere Blechlamellen 6 gemäß der Figur 4 unterbrochen und zweigeteilt. Hierbei ist der Anteil der die Kanalabschnitte 14 aufweisenden Blechlamellen 6 gemäß der Figur 3 an der Gesamtzahl der Blechlamellen 6 des Rotorblechpakets 5 zwischen 95 % und 80 %. Aus der Figur 2 und noch deutlicher aus den Figuren 3 und 4 ist zu entnehmen, dass in den Taschen 9 jeweils zwei Axialkanäle 18 ausgebildet sind, die fluidleitend mit dem Radialkanal 13 verbunden sind. Hierdurch wird das Umströmen der in den Taschen 9 aufgenommenen Permanentmagnete 10 weiter begünstigt. Die Axialkanäle 18 sind dabei an den parallel zu den Radialkanälen 13 ausgerichteten, kürzeren Seiten der Tasche 9 ausgebildet.

Durch die Teilung des Radialkanals 13 ist bei der gezeigten Ausführungsform der Figur 2 das Verhältnis zwischen der Breite des Radialkanals 13 - also dessen axialer Erstreckung parallel zu der Längsachse 19 des Rotorblechpakets 5 - und der axialen Erstreckung (L) des Ringkanals 12 zwischen 80 % x L/2 und 95 % x L/2.

Figur 3 zeigt insbesondere auch, dass der Radialkanal 13 mittig in den Taschenabschnitt 17 der Tasche 9 einmündet. Die Breite des Taschenquerschnitts ist hier zwischen 5 % und 10 % größer als die Dicke des in der Tasche 9 aufgenommenen Permanentmagneten 10.

Im Folgenden wird das erfindungsgemäße Verfahren zur Herstellung eines Rotors 3 für einen EC-Motor 1 noch einmal näher erläutert. In einem ersten Schritt werden eine Rotorwelle 7 und ein eine Durchtrittsöffnung 4 aufweisendes Rotorblechpaketes 5 bereitgestellt. In dem Rotorblechpaket 5 sind Taschen 9 zur Aufnahme von Permanentmagneten 10 ausgebildet. Dann werden die Permanentmagnete 10 in die Taschen 9 des Rotorblechpakets 5 eingesetzt und mit zumindest einem Wuchtring 16 zu einer Einheit zusammengefasst. Diese Einheit wird dann zusammen mit der Rotorwelle 7 in einer Gießform relativ zueinander zentriert und zwar so, dass zwischen der in der Durchtrittsöffnung 4 aufgenommenen Rotorwelle 7 und dem Rotorblechpaket 5 ein Ringkanal 12 ausgebildet ist. Nach dem Schließen der Gießform wird dann unter Druck Vergussmasse 8 über einen Angusskanal in die Gießform eingeleitet. Dies erfolgt im Wesentlichen ausschließlich über die stirnseitige Mündung des Ringkanals 12 zwischen der Rotorwelle 7 und dem Rotorblechpaket 5. Durch in dem Rotorblechpaket 5 ausgebildete Radialkanäle 13, die fluidleitend mit dem Ringkanal 12 verbunden sind, fließt dann die Vergussmasse 8 in die Taschen 9 mit den darin aufgenommenen Permanentmagneten 10. Nach dem Aushärten der Vergussmasse 8 sind die Permanentmagnete 10 dann in den Taschen gesichert, so dass der vergossene Rotor 3 aus der Gießform entnommen werden kann.

### Bezugszeichenliste

- 1: EC-Motor
- 2: Stator
- 3: Rotor
- 4: Durchtrittsöffnung
- 5: Rotorblechpaket
- 6: Blechlamelle
- 7: Rotorwelle
- 8: Vergussmasse
- 9: Tasche
- 10: Permanentmagnet
- 11: Wandung
- 12: Ringkanal
- 13: Radialkanal
- 14: Kanalabschnitt
- 15: Stirnseite
- 16: Wuchtring
- 17: Taschenabschnitt
- 18: Axialkanal
- 19: Längsachse

## Patentansprüche

1. EC-Motor (1) für ein elektrisches Handwerkzeug mit einem Stator (2), in dem ein Rotor (3) drehbar gelagert ist, der ein eine Durchtrittsöffnung (4) aufweisendes Rotorblechpaket (5), das aus einzelnen Blechlamellen (6) gebildet ist, sowie eine Rotorwelle (7) umfasst, die in der Durchtrittsöffnung (4) des Rotorblechpakets (5) durch eine Vergussmasse (8) vergossen ist, sowie mit einer Mehrzahl von Permanentmagneten (10), die in in dem Rotorblechpaket (5) ausgebildeten Taschen (9) aufgenommen sind, wobei zwischen der Rotorwelle (7) und der Wandung (11) der Durchtrittsöffnung (4) ein Ringkanal (12) gebildet ist, der über Radialkanäle (13), die jeweils aus mehreren in benachbarten Blechlamellen (6) des Rotorblechpakets (5) ausgebildeten Kanalabschnitten (14) gebildet sind, mit den Taschen (9) fluidleitend verbunden ist, zur Zuführung der Vergussmasse (8) von dem Ringkanal (12) zu den Taschen (9), **dadurch gekennzeichnet, dass** das Rotorblechpaket (5) aufgebaut ist aus Blechlamellen (6), deren sämtliche Taschenabschnitte (17) jeweils entweder mit der Durchtrittsöffnung (4) über die Kanalabschnitte (14) fluidleitend verbunden oder von der Durchtrittsöffnung (4) räumlich getrennt sind, und dass der Anteil der die Kanalabschnitte (14) aufweisenden Blechlamellen (6) an der Gesamtzahl der Blechlamellen (6) des Rotorblechpakets (5) zwischen 70% und 98% und besonders bevorzugt zwischen 80% und 95% liegt.

2. EC-Motor (1) nach Anspruch 1, **dadurch gekennzeichnet, dass** der Radialkanal (13) fluidleitend mit mindestens einem in den Taschen (9) ausgebildeten Axialkanal (18) verbunden ist.

3. EC-Motor (1) nach Anspruch 1 oder 2, **dadurch gekennzeichnet, dass** der Axialkanal (18) und/oder der Radialkanal (13) pro Tasche (9) jeweils mehrfach, insbesondere zweifach, vorgesehen ist.

4. EC-Motor (1) nach einem der Ansprüche 1 bis 3, **dadurch gekennzeichnet, dass** das Verhältnis zwischen der Breite des Radialkanals (13) und der axialen Erstreckung (L) des Ringkanals (12) in Abhängigkeit von der Anzahl (n) der Radialkanäle (13) pro Tasche (9) zwischen 70 % x L/n und 98 % x L/n und besonders bevorzugt zwischen 80 % x L/n und 95 % x L/n liegt.

5. EC-Motor (1) nach einem der Ansprüche 1 bis 4, **dadurch gekennzeichnet, dass** die Einmündung des Radialkanals (13) in die Tasche (9) taschenmittig angeordnet ist.

6. EC-Motor (1) nach einem der Ansprüche 1 bis 5, **dadurch gekennzeichnet, dass** die Taschen (9) durch eine Trennstruktur jeweils unterteilt sind in mindestens ein erstes Kompartiment und ein zweites Kompartiment.

7. EC-Motor (1) nach Anspruch 6, **dadurch gekennzeichnet, dass** die Trennstruktur derartig ausgebildet ist, dass die Kompartimente fluidleitend miteinander verbunden sind.

8. EC-Motor (1) nach einem der Ansprüche 1 bis 7, **dadurch gekennzeichnet, dass** die Breite des Taschenquerschnitts zwischen 1 % und 10 % und bevorzugt zwischen 2 % und 5 % größer ist als die Dicke der in den Taschen (9) aufgenommenen Permanentmagnete (10).

9. EC-Motor (1) nach einem der Ansprüche 2 bis 8, **dadurch gekennzeichnet, dass** der mindestens eine Axialkanal (18) an den parallel zu den Radialkanälen (13) ausgerichteten Seiten der Tasche (9) ausgebildet ist.

10. EC-Motor (1) nach einem der Ansprüche 1 bis 9, **dadurch gekennzeichnet, dass** die Vergussmasse (8) aus einem duroplastischen Kunststoff gebildet ist.

11. EC-Motor (1) nach einem der Ansprüche 1 bis 10, **dadurch gekennzeichnet, dass** an mindestens einer der Stirnseiten (15) des Rotorblechpakets (5) ein Wuchtring (16) angeordnet ist.

12. Verfahren zur Herstellung eines Rotors (3) eines EC-Motors (1) nach einem der Ansprüche 1 bis 11 mit den folgenden Schritten:
- Bereitstellen einer Rotorwelle (7);
- Bereitstellen eines eine Durchtrittsöffnung (4) aufweisenden Rotorblechpaketes (5) mit Taschen (9) zur Aufnahme von Permanentmagneten (10), wobei das Rotorblechpaket (5) aufgebaut ist aus Blechlamellen (6), deren sämtliche Taschenabschnitte (17) jeweils entweder mit der Durchtrittsöffnung (4) über die Kanalabschnitte (14) fluidleitend verbunden oder von der Durchtrittsöffnung (4) räumlich getrennt sind, und wobei der Anteil der die Kanalabschnitte (14) aufweisenden Blechlamellen (6) an der Gesamtzahl der Blechlamellen (6) des Rotorblechpakets (5) zwischen 70% und 98% und besonders bevorzugt zwischen 80% und 95% liegt;
- Einlegen der Permanentmagnete (10) in die Taschen (9) des Rotorblechpakets (5);
- Einsetzen der Rotorwelle (7) und des Rotorblechpaketes (5) in eine Gießform relativ zueinander zentriert, derart, dass zwischen der in der Durchtrittsöffnung (4) aufgenommenen Rotorwelle (7) und dem Rotorblechpaket (5) ein Ringkanal (12) ausgebildet ist;
- Schließen der Gießform;
- Zuführen von Vergussmasse (8) unter Druck über einen Angusskanal im Wesentlichen ausschließlich in die stirnseitige Mündung des Ringkanals (12) zwischen der Rotorwelle (7) und dem Rotorblechpaket (5) durch in dem Rotorblechpaket (5) ausgebildeten Radialkanäle (13) in die Taschen (9) mit den darin aufgenommenen Permanentmagneten (10);
- Aushärten der Vergussmasse (8);
- Entnehmen des Rotors (3) aus der Gießform.

## Claims

1. EC motor (1) for an electric hand tool having a stator (2) in which a rotor (3) is rotatably mounted, which comprises a rotor laminations package (5) comprising a passage opening (4) and is formed from individual laminations (6), and comprising a rotor shaft (7) which is cast in the passage opening (4) of the rotor laminations package (5) by a casting compound (8), and having a plurality of permanent magnets (10) which are accommodated in pockets (9) formed in the rotor laminations package (5), wherein an annular channel (12) is formed between the rotor shaft (7) and the wall (11) of the passage opening (4), which annular channel (12) is connected via radial channels (13), which are each formed from a plurality of channel sections (14) formed in adjacent laminations (6) of the rotor laminations package (5), to the pockets (9) in a fluid-conducting manner, for feeding the casting compound (8) from the annular channel (12) to the pockets (9), **characterized in that** the rotor laminations package (5) is constructed from laminations (6), wherein all pocket sections (17) of which are in each case either connected in a fluid-conducting manner to the passage opening (4) via the channel sections (14) or are spatially separated from the passage opening (4), and **in that** the proportion of the laminations (6) comprising the channel sections (14) to the total number of laminations (6) of the rotor lamination package (5) is between 70% and 98% and more preferably between 80% and 95%.

2. EC motor (1) according to claim 1, **characterized in that** the radial channel (13) is connected in a fluid-conducting manner to at least one axial channel (18) formed in the pockets (9).

3. EC motor (1) according to claim 1 or 2, **characterized in that** the axial channel (18) and/or the radial channel (13) are each provided multiple times, in particular twice, per pocket (9).

4. EC motor (1) according to any one of claims 1 to 3, **characterized in that** the ratio between the width of the radial channel (13) and the axial extent (L) of the annular channel (12) as a function of the number (n) of radial channels (13) per pocket (9) is between 70% x L/n and 98% x L/n, and more preferably between 80% x L/n and 95% x L/n.

5. EC motor (1) according to any one of claims 1 to 4, **characterized in that** the junction of the radial channel (13) into the pocket (9) is arranged in the center of the pocket.

6. EC motor (1) according to any one of claims 1 to 5, **characterized in that** the pockets (9) are each subdivided by a separation structure into at least a first compartment and a second compartment.

7. EC motor (1) according to claim 6, **characterized in that** the separation structure is configured such that the compartments are connected to one another in a fluid-conducting manner.

8. EC motor (1) according to any one of claims 1 to 7, **characterized in that** the width of the pocket cross-section is between 1% and 10%, and preferably between 2% and 5%, greater than the thickness of the permanent magnets (10) accommodated in the pockets (9).

9. EC motor (1) according to any one of claims 2 to 8, **characterized in that** the at least one axial channel (18) is formed on the sides of the pocket (9) aligned parallel to the radial channels (13).

10. EC motor (1) according to any one of claims 1 to 9, **characterized in that** the casting compound (8) is formed from a thermosetting plastic.

11. EC motor (1) according to any one of claims 1 to 10, **characterized in that** a balancing ring (16) is arranged on at least one of the end faces (15) of the rotor laminations package (5).

12. Method of manufacturing a rotor (3) of an EC motor (1) according to any one of claims 1 to 13, comprising the following steps:
- Providing a rotor shaft (7);
- Providing a rotor lamination stack (5) having a passage opening (4) and pockets (9) for receiving permanent magnets (10), wherein the rotor laminations package (5) is constructed of lamination plates (6), all pocket sections (17) of which are in each case either connected in a fluid-conducting manner to the passage opening (4) via the channel sections (14) or are spatially separated from the passage opening (4), and wherein the proportion of the laminations (6) comprising the channel sections (14) to the total number of laminations (6) of the rotor lamination stack (5) is between 70% and 98% and particularly preferably between 80% and 95%;
- Inserting the permanent magnets (10) into the pockets (9) of the rotor laminations package (5);
- Inserting the rotor shaft (7) and the rotor laminations package (5) into a casting mold centered relative to one another in such a way that an annular channel (12) is formed between the rotor shaft (7) accommodated in the passage opening (4) and the rotor laminations package (5);
- Closing the casting mold;
- Feeding the casting compound (8) under pressure via a sprue channel essentially exclusively into the end mouth of the annular channel (12) between the rotor shaft (7) and the rotor laminations package (5) through radial channels (13) formed in the rotor laminations package (5) into the pockets (9) with the permanent magnets (10) accommodated therein;
- Curing of the casting compound (8);
- Removing the rotor (3) from the casting mold.

## Revendications

1. Moteur EC (1), moteur à commutation électronique, pour un outil à main électrique avec un stator (2), dans lequel un rotor (3) est monté de manière à pouvoir tourner, qui comprend un paquet de tôles de rotor (5) présentant une ouverture de passage (4), qui est formé à partir de lamelles de tôle (6) individuelles, ainsi qu'un arbre de rotor (7), qui est coulé par une masse de scellement (8) dans l'ouverture de passage (4) du paquet de tôles de rotor (5), ainsi qu'avec une multitude d'aimants permanents (10), qui sont logés dans des compartiments (9) réalisés dans le paquet de tôles de rotor (5), dans lequel est formé entre l'arbre de rotor (7) et la paroi (11) de l'ouverture de passage (4) un canal annulaire (12), qui est relié avec acheminement de fluide aux compartiments (9) par l'intermédiaire de canaux radiaux (13), qui sont formés respectivement à partir de plusieurs sections de canal (14) réalisées dans des lamelles de tôle (6) adjacentes du paquet de tôles de rotor (5) pour amener la masse de scellement (8) depuis le canal annulaire (12) vers les compartiments (9), **caractérisé en ce que** le paquet de tôles de rotor (5) est élaboré à partir de lamelles de tôle (6), dont la totalité des sections de compartiment (17) sont respectivement soit reliées avec acheminement de fluide à l'ouverture de passage (4) par l'intermédiaire des sections de canal (14) soit sont séparées spatialement de l'ouverture de passage (4), et que la fraction des lamelles de tôle (6) présentant les sections de canal (14) sur le nombre total des lamelles de tôle (6) du paquet de tôles de rotor (5) est comprise entre 70 % et 98 % et de manière particulièrement préférée entre 80 % et 95 %.

2. Moteur EC (1) selon la revendication 1, **caractérisé en ce que** le canal radial (13) est relié avec acheminement de fluide à au moins un canal axial (18) réalisé dans les compartiments (9).

3. Moteur EC (1) selon la revendication 1 ou 2, **caractérisé en ce que** le canal axial (18) et/ou le canal radial (13) sont prévus respectivement de manière multiple, en particulier en double, par compartiment (9).

4. Moteur EC (1) selon l'une quelconque des revendications 1 à 3, **caractérisé en ce que** le rapport entre la largeur du canal radial (13) et l'extension axiale (L) du canal annulaire (12) est compris en fonction du nombre (n) des canaux radiaux (13) par compartiment (9) entre 70 % x L/n et 98 % x L/n, et de manière particulièrement préférée entre 80 % x L/n et 95 % x L/n.

5. Moteur EC (1) selon l'une quelconque des revendications 1 à 4, **caractérisé en ce que** l'embouchure du canal radial (13) est disposée au centre du compartiment dans le compartiment (9).

6. Moteur EC (1) selon l'une quelconque des revendications 1 à 5, **caractérisé en ce que** les compartiments (9) sont divisés respectivement par une structure de séparation en au moins un premier compartiment et en un deuxième compartiment.

7. Moteur EC (1) selon la revendication 6, **caractérisé en ce que** la structure de séparation est réalisée de telle manière que les compartiments sont reliés entre eux avec acheminement de fluide.

8. Moteur EC (1) selon l'une quelconque des revendications 1 à 7, **caractérisé en ce que** la largeur de la section transversale de compartiment entre 1 % et 10 % et de manière préférée entre 2 % et 5 % est plus grande que l'épaisseur des aimants permanents (10) logés dans les compartiments (9).

9. Moteur EC (1) selon l'une quelconque des revendications 2 à 8, **caractérisé en ce que** l'au moins un canal axial (18) est réalisé sur les côtés, orientés de manière parallèle par rapport aux canaux radiaux (13), du compartiment (9).

10. Moteur EC (1) selon l'une quelconque des revendications 1 à 9, **caractérisé en ce que** la masse de scellement (8) est formée à partir d'une matière plastique thermodurcissable.

11. Moteur EC (1) selon l'une quelconque des revendications 1 à 10, **caractérisé en ce qu'**un anneau d'équilibrage (16) est disposé sur au moins un des côtés frontaux (15) du paquet de tôles de rotor (5).

12. Procédé de fabrication d'un rotor (3) d'un moteur EC (1) selon l'une quelconque des revendications 1 à 11, avec les étapes suivantes :
- de fourniture d'un arbre de rotor (7) ;
- de fourniture d'un paquet de tôles de rotor (5) présentant une ouverture de passage (4) avec des compartiments (9) pour loger des aimants permanents (10), dans lequel le paquet de tôles de rotor (5) est élaboré à partir de lamelles de tôle (6), dont la totalité des sections de compartiment (17) sont respectivement soit reliées avec acheminement de fluide à l'ouverture de passage (4) par l'intermédiaire des sections de canal (14) soit sont séparées spatialement de l'ouverture de passage (4) et dans lequel la fraction des lamelles de tôle (6) présentant les sections de canal (14) sur le nombre total des lamelles de tôle (6) du paquet de tôles de rotor (5) est comprise entre 70 % et 98 % et de manière particulièrement préférée entre 80 % et 95 % ;
- de placement des aimants permanents (10) dans les compartiments (9) du paquet de tôles de rotor (5) ;
- d'insertion de l'arbre de rotor (7) et du paquet de tôles de rotor (5) dans un moule de coulée de manière centrée l'un par rapport à l'autre de telle manière qu'un canal annulaire (12) est réalisé entre l'arbre de rotor (7) logé dans l'ouverture de passage (4) et le paquet de tôles de rotor (5) ;
- de fermeture du moule de coulée ;
- d'amenée de la masse de scellement (8) sous pression par l'intermédiaire d'un canal de carotte sensiblement exclusivement dans la bouche côté frontal du canal annulaire (12) entre l'arbre de rotor (7) et le paquet de tôles de rotor (5) par des canaux radiaux (13) réalisés dans le paquet de tôles de rotor (5) dans les compartiments (9) avec les aimants permanents (10) logés dans ceux-ci ;
- de durcissement de la masse de scellement (8) ;
- de retrait du rotor (3) hors du moule de coulée.
